# EUROPÄISCHE PATENTSCHRIFT

(11) **EP 0 300 990 B1**
(45) Veröffentlichungstag und Bekanntmachung des Hinweises auf die Patenterteilung: **25.08.1993**
(21) Anmeldenummer: 88890157.6
(22) Anmeldetag: 20.06.1988
(51) Int. Cl.: G01N 21/77, G01N 21/64

(54) **Deckschicht, vorzugsweise zur probenseitigen Anbringung an optischen Ionensensoren**
Protective coating for the part of an optical ion sensor in contact with the sample
Couche pour recouvrir la partie d'un capteur optique d'ions en contact avec l'échantillon

(30) Priorität: 20.07.1987 AU 1833/87
(43) Veröffentlichungstag der Anmeldung: 25.01.1989
(73) Patentinhaber: AVL Medical Instruments AG, 8207 Schaffhausen (CH)
(72) Erfinder: Offenbacher, Helmut, Dr., A-8020 Graz (AT); Schwarzenegger, Erna, A-8102 Semriach (AT)
(74) Vertreter: Krause, Walter, Dr. Dipl.-Ing.

(56) Entgegenhaltungen:
- EP-A- 0 135 745
- EP-A- 0 244 394
- DE-A- 3 343 636
- IEEE TRANSACTIONS ON BIOMEDICAL ENGINEERING Band BME-33, Nr. 2, Februar 1986, Seiten 117-132; J.L. GEHRICH et al.: "Optical Fluorescence and Its Application to an Intravascular Blood Gas Monitoring System"

## Beschreibung

Die Erfindung betrifft eine Deckschicht, vorzugsweise zur probenseitigen Anbringung an optischen Ionensensoren, sowie ein Verfahren zur Herstellung der Deckschicht.

In der klinischen Analytik gewinnen in den letzten Jahren die optischen Sensoren immer mehr an Bedeutung, so bringen diese besonders in puncto Miniaturisierbarkeit gegenüber den herkömmlichen elektrochemischen Sensoren große Vorteile.

Optische Sensoren, sogenannte Optoden, bestehen aus transparenten Trägermaterialien, auf denen Indikatoren auf Basis Absorptions- bzw. Fluoreszenzfarbstoff sowohl chemisch als auch physikalisch fixiert sind.

Das Prinzip der Funktion derartiger Sensoren beruht darauf, daß der zu bestimmende Analyt mit dem Indikator spezifisch in Wechselwirkung tritt, wobei je nach Art des Indikators eine Veränderung seines Lichtabsorptions- bzw. Fluoreszenzverhaltens beobachtet werden kann.

Derartige Sensoren sind beispielsweise aus der AT-PS 381 592 bekannt und bedienen sich des Prinzips der Remissionsmeßtechnik. Das gefilterte Licht einer Lichtquelle wird dabei über einen Lichtleiter zur indikatortragenden sensitiven Schicht des optischen Sensors geleitet. Die sensitive Schicht steht beim Meßvorgang mit der Probe in der Meßkammer in Kontakt, wobei abhängig von der Konzentration des zu messenden Stoffes der Indikator, beispielsweise ein Absorptionsfarbstoff, mit einer Änderung der Intensität des reflektierten Lichtes reagiert. Das reflektierte Licht, beispielsweise im Fall eines Fluoreszenzindikators das Fluoreszenzlicht, wird über ein optisches Filter einem Detektor zugeleitet, wo das Licht in ein elektrisches Meßsignal umgewandelt wird.

Ohne geeignete Maßnahmen können dabei sowohl Störeinflüsse optischer als auch chemischer Natur auftreten. Die optischen Störeinflüsse umfassen vor allem Lichtintensitätsschwankungen, die nicht von der Konzentration des Analyten abhängig sind, sondern durch Lichtwechselwirkung mit der Probe oder allgemein mit der Sensorumgebung entstehen. Beispiele dafür sind der Umgebungslichteinfall in den Sensor- und den Lichtdetektionsbereich, Lichtabsorption und Lichtstreuung in der zu messenden Probe, bzw. Eigenfluoreszenz derselben, sowie Änderungen der Reflexionsbedingungen an der Grenzfläche Sensor, Probe durch Brechungsindexschwankungen der Probe.

Alle diese Phänomene können zur Beeinflussung des Meßsignals führen, das als analytabhängige Lichtintensität empfangen wird.

Störeinflüsse chemischer Natur sind folgendermaßen zu verstehen: Bei optischen Sensoren werden häufig an Trägeroberflächen immobilisierte Indikatoren in direktem Kontakt mit dem Probenmedium gebracht, dies ist dann der Fall, wenn die Meßaufgabe darin besteht, ionische Substanzen zu analysieren, z.B. bei einer Messung des pH-Wertes.

Einflußfaktoren unspezifischer Natur sind hier vor allem die Ionenstärke der Probe und geladene Makromoleküle, beispielsweise Proteine, welche die Meßsignale verändern und die Ursache gravierender Meßfehler sein können.

Aus einem älteren Vorschlag ist es dabei bekannt, eine Deckschicht auf eine Sensoroberfläche aufzubringen, welche die Mikroumgebung des auf der Sensoroberfläche vorliegenden Indikators bestimmt und beispielsweise Ionenstärkeeinflüsse der Probe weitgehend einschränkt. Der sogenannte "Eiweißfehler", verursacht durch geladene Makromoleküle, läßt sich jedoch nur durch Fernhalten der Proteine von der Sensoroberfläche verhindern.

Der Erfindung stellt sich somit die Aufgabe, eine im spektralen Bereich des zu detektierenden Lichtes lichtundurchlässige Deckschicht, vorzugsweise zur probenseitigen Anbringung an optischen Ionensensoren vorzuschlagen, welche die genannten optischen und chemischen Störeinflüsse verhindert, wobei jedoch die Wechselwirkung zwischen Analyt und Indikator nicht verändert werden soll. Ferner soll die Einstellzeit des Sensorelementes keine wesentliche Beeinträchtigung erfahren.

Diese Aufgabe wird erfindungsgemäß dadurch gelöst, daß die Deckschicht aus einer hydrophilen ionenpermeablen Polymermembran besteht, welche zur Unterdrückung von Fehllicht reduktiv oder reduktiv-zementativ abgeschiedene Edelmetallpigmente enthält. Für praktisch alle hydrophilen Polymermembranen oder Polymerfolien ist - mit unterschiedlichen Grenzmolekulargewichten - eine gute Durchlässigkeit ionischer bzw. polarer Substanzen gegeben und in vielen Fällen durch den Herstellungsprozeß steuerbar. Zur reduktiven Einbringung der Edelmetallpigmente wird die Polymermembran mit einer Edelmetallsalzlösung und einem entsprechenden Reduktionsmittel behandelt. In einem anschließenden Zementationsprozeß können beispielsweise Silberpartikel durch Behandlung mit einer Goldsäure durch Goldpartikel ersetzt werden. Die so entstehende Deckschicht behält ihre mechanischen und ionenselektiven Eigenschaften und ist zusätzlich für Störlicht im Wellenlängenbereich des zu detektierenden Lichtes undurchlässig.

Kriterium für die mechanische Stabilität einer hydrophilen Polymermembran ist die Unlöslichkeit in Wasser und ionenhaltige Lösungen, sowie das weitgehende Aufrechterhalten von Festigkeit und Elastizität bei Kontakt mit diesen Medien. Wasser-und Ionenpermeabilität ist durch das Quellverhalten der hydrophilen Membranen gewährleistet und daran zu erkennen.

Primäres Kriterium für Hydrophilie und damit Ionenpermeabilität einer mechanisch stabilen Folie ist das Vorhandensein polarer und/oder ionischer Gruppen am Polymerkörper (zum Beispiel -OH, -CONHR, -OR, -NH₂, NR₂, -COO⁻, -SO₃⁻, -NH₃⁺, -NR₃⁺ u.s.w.). Diese Gruppen müssen nicht als Seitengruppen des Polymergerüstes vorhanden sein, sondern können in das Polymergerüst integriert sein.

Es ist natürlich auch möglich, die erfindungsgemäße Deckschicht für andere Anwendungsbereiche zu verwenden, beispielsweise für katalytische Zwecke, oder in anderen Bereichen, wo selektiv ionenpermeable Grenzschichten benötigt werden, die gleichzeitig lichtundurchlässig sind.

Erfindungsgemäß ist es von Vorteil, daß die hydrophile ionenpermeable Polymermembran ein hohes Molekulargewicht und/oder Quervernetzungen aufweist und/oder in einem teilkristallinen Zustand vorliegt. Die geforderten Membraneigenschaften, wie Wasserunlöslichkeit und selektive Ionenpermeabilität, sind beispielsweise bei hydrophilen Polymeren mit hohem Molekulargewicht, bei quervernetzten hydrophilen Polymeren oder bei teilkristallinen Polymeren besonders ausgeprägt. Der teilkristalline Zustand ist gekennzeichnet durch eine Ausrichtung der Polymermoleküle, die durch Verstreckung erzielt werden kann.

Es ist dabei von besonderem Vorteil, wenn die hydrophile ionenpermeable Polymermembran aus regenerierter Cellulose besteht (Cellophan) oder wenn die hydrophile ionenpermeable Polymermembran ein quervernetzter oder verstreckter Polyvinylalkohol ist, wobei erfindungsgemäß Edelmetallpigmente aus der Gruppe Ag, Au und Pt in kolloidaler Verteilung in die hydrophile ionenpermeable Polymermembran eingebettet sind.

In einer Ausgestaltung der Erfindung kann vorgesehen sein, daß in der hydrophilen, ionenpermeablen Edelmetallpigmente beinhaltenden Polymermembran Indikatormaterial in homogener Verteilung vorliegt.

Durch Aufspannen der so erhaltenen Deckschicht auf einen transparenten Sensorträger bzw. auf das Ende eines Lichtleiters erhält man einen je nach Selektivität des Indikators für eine bestimmte Ionenart geeigneten Sensor.

Die Pigmentierung der genannten Polymermembran, beispielsweise von regenerierter Cellulose, ist mit herkömmlichen Methoden, also durch Einbringen des Pigments in das Vorpolymer und anschließender Verstreckung nicht durchführbar, da bei einer derartigen Vorgangsweise wesentliche Membraneigenschaften, wie z.B. Festigkeit etc., verlorengehen.

Auch Färbung durch chemische Immobilisierung von Farbstoffen bzw. durch Aufbringen von direktziehenden Azofarbstoffen führt speziell bei Cellophanfolien zu einer Verschlechterung der mechanischen Eigenschaften bzw. zu einer drastischen Reduzierung der Permeabilität für Ionen, im besonderen für Hydroniumionen.

Die Ursache für die Abnahme der Ionenpermeabilität ist durch die Abnahme der Hydrophilie bei der chemischen Modifizierung bzw. bei der Einlagerung des im wesentlichen unpolareren Farbstoffes begründbar.

Ein erfindungsgemäßes Verfahren zur Herstellung einer Deckschicht nach der Erfindung sieht vor, daß eine hydrophile ionenpermeable Polymermembran hergestellt wird, daß die Polymermembran mit zumindest einem gelösten Salz eines Edelmetalls aus der Gruppe Ag, Au und Pt sowie zumindest einem Reduktionsmittel behandelt wird, wodurch das entsprechende Edelmetallpigment in kolloidaler Verteilung in die Polymermembran eingelagert wird. Überraschenderweise hat sich gezeigt, daß der Aufgabenstellung gerecht werdende Deckschichten durch reduktive oder reduktiv-zementative Einlagerung kolloidaler Edelmetalle in die vorgefertigte hydrophile Polymermembran erhalten werden können.

Auch hat sich gezeigt, daß die Reduktion der Edelmetallsalze bei Aufbringen mit dem Reduktionsmittel in der Folie selbst schneller abläuft als in der aufgebrachten Lösung, wodurch ein "Verspiegeln" der Folie unter Verlust der Analytpermeabilität verhindert wird.

Für die Edelmetallkolloidpigmentierung eignen sich im besonderen Silber-, Gold- und Platinsalze, als Reduktionsmedien dienen an sich die für die jeweiligen Edelmetalle bekannten Reduktionsmittel. Für die Reduktion der Silbersalze eignen sich im besonderen Substanzen mit aldehydischer Funktion.

Neben der reduktiven Einbringung der Edelmetallkolloide gelingt es auch unedlere in der Cellophanfolie ausgeschiedene Metallkolloide auf dem Wege der Zementation in Edelmetallkolloidpigmente umzuwandeln.

Die reduktive Edelmetallkolloidpigmentierung kann auf mehrere Arten durchgeführt werden, so kann erfindungsgemäß auf die hydrophile ionenpermeable Polymermembran abwechselnd eine Lösung des Edelmetallsalzes und eine Lösung des Reduktionsmittels durch Tauchen, Sprühen oder Streichen aufgetragen werden, sowie die Polymermembran ggf. nach jedem Aufbringen der Edelmetallsalzlösung getrocknet werden.

Im Tauchverfahren wird die Plymermembran mit der Metallsalzlösung und dem Reduktionsmittel getränkt. Es kann jedoch durch die Wechselbäder zu einer Verschleppung der Reagenzien und in weiterer Folge zur Metallkeimbildung sowohl im Edelmetallsalz-als auch Reduktionsbad kommen. Das Auftreten von Metallkeimen in den Badflüssigkeiten wirkt sich auf die Herstellung der Deckschicht insoferne hinderlich aus, als die Redkution der Metallsalze bei gleichzeitig raschem Anwachsen der Keime in unmittelbarer Foliennähe die Metallkolloidausscheidung in der Folie selbst inhibiert. Derartige Bäder werden aufgrund der "Vergiftung" mit Metallkeimen bald inaktiv, was einen hohen Verbrauch an Edelmetallsalzen bedingt und somit hohe Kosten verursacht.

Im Sprühverfahren wird die Edelmetallsalzlösung und ein dazu passendes starkes Reduktionsmittel wechselweise auf die Folie gesprüht. Bei diesem Verfahren ist es günstig, die Folie nach Aufsprühen der Edelmetallsalzlösung trocknen zu lassen, wobei die Edelmetallionen in der Folie aufkonzentriert werden. Die Kolloidbildung setzt in diesem Falle sofort bei Aufsprühen des Reduktionsmittels ein.

Die beispielsweise nach diesem Verfahren hergestellten Goldkolloidfolien zeichnen sich durch Transparenz und schwache Blaufärbung aus, was vermuten läßt, daß das ausgeschiedene Gold eine Partikelgröße von einigen tausend Atomlagen überschritten hat.

Erfindungsgemäß ist vorgesehen, daß zur Herstellung einer Silberkolloidfolie eine Polymermembran, vorzugsweise regenerierte Cellulose mit einer Lösung des Edelmetallsalzes AgNO₃ und einer Glucose- oder Formaldehydlösung als Reduktionsmittel behandelt wird.

Es folgen zwei Beispiele zur Herstelllung von Silberkolloidfolien:
1) Eine im feuchten Zustand auf einen Rahmen gespannte Cellophanfolie wird wechselweise in eine mit einem Ammoniaküberschuß versehene 2%ige Silbernitrat-Lösung sowie in halbkonzentrierte Formaldehydlösung getaucht. Vor jedem Badwechsel wird die der Folie anhaftende überschüssige Lösung mit einem saugfähigen Filterpapier weitgehend entfernt. Nach drei bis fünf Wechselbädern ist die Folie im sichtbaren Spektralbereich optisch vollkommen dicht.
   Nach gründlichem Waschen mit Ammoniakwasser wird die Folie im Rahmen langsam getrocknet. Um die mechanischen Eigenschaften der trockenen Folie zu erhöhen, setzt man dem Waschwasser etwas Ethylenglykol bzw. Glycerin zu.
2) Silbernitrat- und ammoniakalische Glucoselösung bzw. ammoniakalische Silbernitrat- und Formaldehydlösung werden auf eine feucht gespannte Cellophanfolie wechselweise aufgesprüht, wobei man die Folie zwischen den einzelnen Sprühvorgängen trocknen läßt bzw. die Metallsalzlösung und das Reduktionsmittel auf die jeweils gegenüberliegende Seite der Folie sprüht. In beiden Fällen wird bereits nach ein bis drei Sprühvorgängen im analytischen Wellenlängenbereich vollständige Lichtabsorption erreicht.

Zur Herstellung einer Platinkolloidfolie ist erfindungsgemäß vorgesehen, daß eine Polymermembran, vorzugsweise regenerierte Zellulose mit einer Hexachlorplatinsäurelösung und einer Zinn(II)-Lösung als Reduktionsmittel behandelt wird. Dabei wird auf eine feucht gespannte Cellophanfolie eine 5%ige Hexachlorplatinsäurelösung in Methanol/Wasser aufgebracht. Nach langsamer Trocknung wird eine 5%ige saure bzw. alkalische Zinn(II)-Lösung aufgesprüht und die so beschichtete Membran eine Stunde bei 50°C belassen. Die braun durchscheinende Folie ist im Wellenlängenbereich von 200 nm bis 480 nm vollständig optisch dicht, die Transmission beträgt bei 800 nm lediglich 60 %.

Eine weitere Möglichkeit zur reduktiven Edelmetallkolloidpigmentierung ist erfindungsgemäß dadurch gegeben, daß auf die hydrophile ionenpermeable Polymermembran eine gemeinsame Lösung des Edelmetallsalzes und des Reduktionsmittels durch Tauchen, Sprühen oder Streichen aufgebracht wird und nach beendeter reduktiver Einlagerung der Edelmetallpigmente an der Polymermembran oberflächlich abgeschiedene Metallgranulate abgewaschen werden. Dabei werden kleine Portionen an Edelmetallsalzlösung gemischt mit einem eher schwachen Reduktionsmittel auf die feucht gespannte Folie gesprüht und bei Raumtemperatur bzw. erhöhter Temperatur belassen, wobei die Reduktion vorwiegend in der Folie zur Edelmetallausscheidung führt. Die Reduktion in dem der Folie anhaftenden Flüssigkeitsfilm führt zu granularer Metallausscheidung, die durch Abwaschen mühelos beseitigt werden kann.

Eine Weiterbildung der Erfindung sieht vor, daß die Polymermembran, vorzugsweise regenerierte Cellulose, mit einer wäßrigen Lösung aus Silbernitrat und D+Glucose besprüht und in einem Behälter in Ammoniakatmosphäre getrocknet wird, wobei die Temperatur vorzugsweise auf 50°C erhöht wird. Zur Herstellung einer Silberkolloidfolie nach diesem Verfahren wird eine im feuchten Zustand auf einen Rahmen gespannte Cellophanfolie mit einer Lösung, bestehend aus 1 g Silbernitrat, 3 g D+Glucose und 10 ml Wasser, besprüht. Nach weitgehendem Trocknen bringt man die beschichtete Folie in ein geschlossenes Behältnis, in dem vorher wenige ml konzentrierter Ammoniak eingebracht wurden. Die mit Ammoniak geschwängerte Atmosphäre beschleunigt die Reduktion der Silberionen in der Folie, eine zusätzliche Beschleunigung erreicht man bei Temperaturerhöhung, z.B. auf 50°C.

Bei dieser Methode kommt es im Augenblick des Hinzutretens von Ammoniak zu einer Braunfärbung der Folie, das Nachdunkeln kann je nach Temperatur 1/2 bis 24 Stunden betragen und kann photometrisch verfolgt werden. Die Ausscheidung von Silber in der der Folie anhaftenden Reagenzschicht tritt zeitlich verzögert auf und führt zur Bildung von feinkörnigem Material, welches beim Waschprozeß leicht entfernt werden kann.

Um wirtschaftlich günstig optisch dichte Goldkolloidfolien herstellen zu können, ist erfindungsgemäß vorgesehen, daß in die hydrophile ionenpermeable Membran Silberpigmente reduktiv eingebracht werden und in einem Zementationsprozeß durch Goldpigmente ersetzt werden, wobei erfindungsgemäß die hydrophile ionenpermeable Membran im Zementationsprozeß mit einer Tetrachlorgoldsäurelösung in Kontakt gebracht wird. Den fortschreitenden Zementationsprozeß, also das Ausscheiden von Gold auf die Silberpartikeln bei gleichzeitigem Auflösen derselben, erkennt man dadurch, daß die im Durchlicht dunkelrotbraunen Ausgangsfolien einen Farbwechsel nach Dunkelviolett durchmachen. Diese Art der Edelmetallpigmentierung bringt auch von der Kostenseite Vorteile. Für das Vorliegen optisch dichter Membranen muß ein genügend hoher Gehalt an Edelmetallkolloid in der Polymermatrix gewährleistet sein. Dies erreicht man durch das Bereitstellen genügend hoher Edelmetallion-Konzentrationen im gequollenen Membranmaterial und somit durch Tränken mit konzentrierten Edelmetallsalzlösungen. Die zementative Abscheidung von Metallen mit stark positivem Redoxpotential auf solchen, die unedler sind, gelingt bei bereits niedrigen Edelmetallsalzkonzentrationen. Da Gold- und Platinsalze wesentlich teurer sind als Silbernitrat, stellt die Erzeugung von chemisch hochresistenden Deckschichten via Zementation eine elegante Methode dar, so kann man bei diesem Verfahren sowohl durch Erhöhung der Reaktionszeit als auch der Reaktionstemperatur den Verbrauch an Gold- bzw. Platinsalzen um den Faktor 10² senken.

Eine Goldkolloidfolie wird z.B. folgendermaßen hergestellt: Eine silberkolloidpigmentierte Cellophanfolie wird etwa zwei Stunden unter Lichtausschluß in 2%ige methanolische Tetrachlorgoldsäurelösung getaucht und anschließend zwecks Entfernung des bei der Reaktion in der Folie anfallenden Silberchlorids mit verdünntem Ammoniak gewaschen.

Weiters kann erfindungsgemäß auch vorgesehen sein, daß die hydrophile ionenpermeable Polymermembran durch Trocknen einer als Film aufgetragenen Polyvinylalkohollösung hergestellt wird, sowie daß dieser Film zum Zwecke der chemischen Vernetzung Glutardialdehyddämpfen ausgesetzt wird. Beispielsweise wird eine 5%ige Polyvinylalkohollösung in einem 200 µm dicken Film aufgetragen und bei maximal 50°C getrocknet, wobei eine Folie mit einer Schichtstärke von 10 µm resultiert. Diese Folie wird zum Zwecke der chemischen Vernetzung auf Basis Acetalisierung Glutardialdehyddämpfen ausgesetzt und nach Waschen und Spannen auf einen Rahmen mit Silberkolloid angefärbt, wobei eine dunkelbraune elastische in Wasser gut quellbare Membran resultiert.

Schließlich kann erfindungsgemäß nach dem Einbringen der Edelmetallpigmente in an sich bekannter Weise Indikatormaterial in homogener Verteilung in die Polymermembran eingebracht werden.

Dabei ist vorgesehen, daß man in einer hydrophilen oder permeablen Polymermembran sowohl das optisch entkoppelnde Edelmetallkolloid als auch anschließend den Indikator via chemische Immobilisierung, wie z.B. in der AT-PS 380 957 beschrieben, einbringt. Durch diese Maßnahme erhält man eine Sensorfolie, die weder Umgebungslicht-Störeinflüsse noch den Proteinfehler zeigt.

Eine Sensorfolie mit den genannten Eigenschaften ist auch realisierbar, wenn sowohl das Edelmetallkolloid als auch der fluoreszenzoptische Indikator, letzterer durch chemische Immobilisierung, in der Membran homogen verteilt vorliegt. Es muß jedoch beachtet werden, daß man gerade soviel Edelmetallkolloid einlagert, daß bei Impermeabilität für das Licht der analytischen Wellenlängen von außen, sensorseitig eine genügend große Eindringtiefe desselben Lichtes in die Membran gegeben ist.

Um bei derartigen Sensorfolien die Lichtausbeute und somit das Meßsignal zu erhöhen, wählt man vorzugsweise Membranen mit größeren Schichtstärken (d ≧ 10 µm).

Die Edelmetallpigmentausscheidung kann während der Reaktion mittels optischer Einrichtungen, die einem Photometer gleichen, zeitlich verfolgt und bei Erreichen eines definierten Transmissionswerts bei einer vom einzubringenden Edelmetall abhängigen Wellenlänge durch Waschen gestoppt werden.

Der dabei festzusetzende Transmissionswert hängt von der Membranschichtstärke, von der Art des Indikators und vom Indikator-Belegungsgrad und somit auch von der Immobilisierungsmethode ab.

Die Immobilisierung des Indikators wird aufgrund der Aggressivität der Reaktionsprodukte, die bei der Edelmetallreduktion auftreten, günstigerweise der Edelmetallkolloidpigmentierungsreaktion nachgeschaltet.

Nachstehend folgt ein Beispiel für die Herstellung einer Deckschicht mit eingelagertem Indikator.

Eine Cellophanfolie wird nach Anspruch 11 hergestellt und die Reaktion bei einer Transmission von 5 % (gemessen bei 600 µm) durch Waschen mit Wasser abgebrochen. Nach dem Trocknen erfolgt die Immobilisierung des Farbstoffes analog AT-PS 380 957. Zu diesem Zweck wird die Folie zwei Tage mit 40%igen Polyäthyleniminlösung getränkt, eine Minute mit Wasser gewaschen und über KOH bzw. Calciumoxid getrocknet. Die trockene aminomodifizierte Folie wird eine Minute lang mit einer Lösung von 0,5 mg 1-Acetoxypyren-3,6,7-Trisulfochlorid in 10 ml Dioxan kontaktiert und nach Waschen mit Dioxan und Wasser in eine 5%ige Natriumhydrogencarbonatlösung getaucht. Nach Waschen mit Wasser und Trocknen bei Raumtemperatur ist die Sensormembran funktionsfähig.

Die Erfindung wird im folgenden anhand der Zeichnung näher erläutert. Es zeigen:
Fig. 1 in schematischer Darstellung eine erfindungsgemäße Deckschicht auf einem optischen Ionensensor,
Fig. 2 ein Detail aus Fig. 1 sowie die
Fig. 3 bis 6 Transmissionsspektren der erfindungsgemäßen Deckschicht.

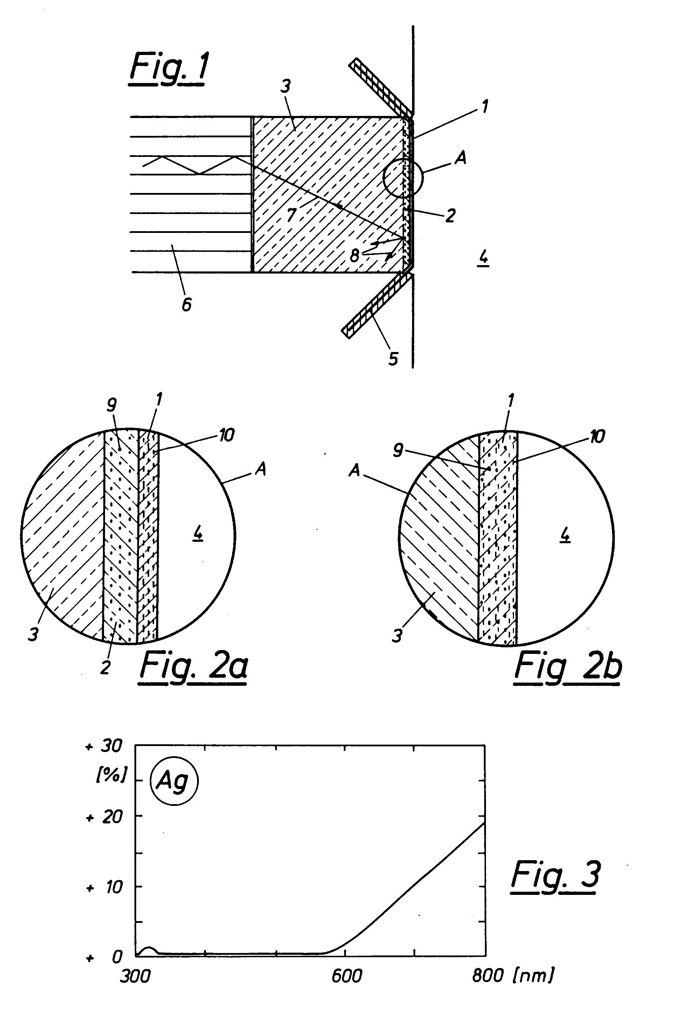

In Fig. 1 ist beispielsweise ein pH-Sensor mit einer hydrophilen ionenpermeablen Polymermembran 1 der beschriebenen Art so abgedeckt, daß sich die Polymermembran 1 zwischen sensitiver Schicht 2 des Sensors 3 und dem Probenraum 4 befindet. Die Fixierung der Polymermembran 1 erfolgt mit herkömmlichen Methoden, etwa durch mechanische Kiemmen, Spannen mittels O-Ring oder vorzugsweise beidseitiges Verkleben in einem Randbereich 5 außerhalb des sensitiven Bereiches des Sensors.

Der Vollständigkeit halber wird noch auf das mit 6 bezeichnete Lichtleitsystem, auf die mit 7 bezeichnete Anregungsstrahlung sowie auf die Reflexions- bzw. Fluoreszenzstrahlung 8 hingewiesen.

Fig. 2a zeigt in vergrößertem Maßstab einen Teil der sensitiven Schicht 2 mit dem homogen verteilten Indikatormaterial 9 und daran anliegender Polymermembran 1, welche die Edelmetallpigmente 10 enthält.

Es ist auch möglich, wie in Fig. 2b dargestellt, durch an sich bekannte Verfahren das Indikatormaterial 9 direkt in die Polymermembran 1 einzubringen, wodurch die sensitive Schicht 2 des Sensors 3 entfallen kann. Verwendung und Eigenschaften der oben für optische pH-Sensoren beschriebenen Deckschicht können in entsprechender Weise natürlich auch auf Sensoren für andere ionische Analyte übertragen werden.

In den Diagrammen nach Fig. 3 bis 6 ist jeweils auf der Abszisse die Wellenlänge in nm aufgetragen, wobei ein Teilstrich jeweils 100 nm entspricht; auf der Ordinate ist die Transmission in Prozent angegeben.

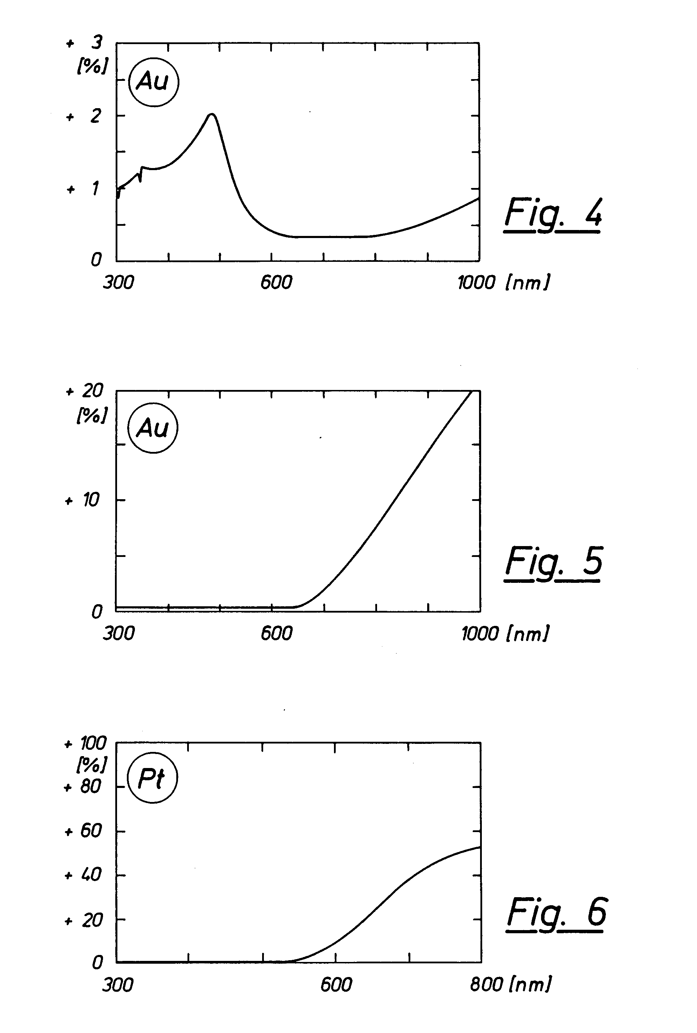

Fig. 3 stellt das Transmissionsspektrum einer silberkolloidpigmentierten Cellophanfolie, hergestellt nach Anspruch 12, Fig. 4 das Spektrum einer goldpigmentierten Cellophanfolie, hergestellt nach Anspruch 9, Fig. 5 das Spektrum einer goldkollloidpigmentierten Cellophanfolie, hergestellt nach Anspruch 13 und Fig. 6 das Transmissionsspektrum einer platinkolloidpigmentierten Cellophanfolie nach Anspruch 9 dar.

Wie aus den Transmissionsspektren Fig. 3 bis 6 ersichtlich ist, zeigen die Silber-, Platin- und nach dem Zementationsverfahren hergestellten goldkolloidpigmentierten Membranen im langwelligen UV-Bereich sowie im sichtbaren Bereich bis etwa 600 nm vollständige Absorption, die nach dem Reduktionsverfahren, beispielsweise unter Verwendung von Ascorbinsäure als Reduktionsmittel, hergestellte Goldfolie (Fig. 4) dagegen eine schwache Lichtdurchlässigkeit bei Wellenlängen < 600 nm, wobei das Transmissionsmaximum bei 480 nm liegt.

Zur Vermeidung optischer und chemischer Störeinflüsse bei optischen Sensoren für die Messung ionischer Analyte eignen sich somit bevorzugte Ag- bzw. Pt-pigmentierte Membranen, die nach Fig. 3 bzw. Fig. 6 hergestellt werden, bzw. nach Fig. 5 präparierte Au-pigmentierte Membranen.

Zu Meßfehlern führende Signaleinflüsse durch optische Phänomene oder Makromoleküle der Probe (Proteinfehler) treten bei derart präparierten Sensoren nicht mehr auf. Physikochemische Eigenschaften der Sensoren im Bezug auf Wechselwirkung zwischen Analyt und optischen Indikator werden durch die Maßnahme nicht beeinträchtigt. So werden bei pH-Sensoren vor und nach der Überspannung mit der erfindungsgemäßen Deckschicht über-einstimmende Intensität/pH-Wert-Funktionen und somit idente pKa-Werte (negativ dekadischer Logarithmus der Säurekonstante) gefunden.

## Patentansprüche

1. Deckschicht, vorzugsweise zur probenseitigen Anbringung an optischen Ionensensoren, welche aus einer hydrophilen ionenpermeablen Polymermembran (1) besteht, **dadurch gekennzeichnet,** daß die Deckschicht zur Unterdrückung von Fehllicht reduktive oder reduktiv-zementativ abgeschiedene Edelmetallpigmente (10) enthält.

2. Deckschicht nach Anspruch 1, **dadurch gekennzeichnet,** daß die hydrophile ionenpermeable Polymermembran (1) ein hohes Molekulargewicht und/oder Quervernetzungen aufweist und/oder in einem teilkristallinen Zustand vorliegt.

3. Deckschicht nach Anspruch 1 oder 2, **dadurch gekennzeichnet,** daß die hydrophile ionenpermeable Polymermembran (1) aus regenerierter Cellulose besteht.

4. Deckschicht nach Anspruch 1 oder 2, **dadurch gekennzeichnet,** daß die hydrophile ionenpermeable Polymermembran (1) ein quervernetzter oder verstreckter Polyvinylalkohol ist.

5. Deckschicht nach einem der Ansprüche 1 bis 4, **dadurch gekennzeichnet,** daß die hydrophile ionenpermeable Polymermembran (1) Edelmetallpigmente (10) aus der Gruppe Ag, Au und Pt in kolloidaler Verteilung enthält.

6. Deckschicht nach einem der Ansprüche 1 bis 5, **dadurch gekennzeichnet,** daß in der hydrophilen, ionenpermeablen Edelmetallpigmente beinhaltenden Polymermembran (1) Indikatormaterial (9) in homogener Verteilung vorliegt.

7. Verfahren zur Herstellung einer Deckschicht nach einem der Ansprüche 1 bis 7, **dadurch gekennzeichnet,** daß eine hydrophile ionenpermeable Polymermembran hergestellt wird, daß die Polymermembran mit zumindest einem gelösten Salz eines Edelmetalls aus der Gruppe Ag, Au und Pt, sowie zumindest einem Reduktionsmittel behandelt wird, wodurch das entsprechende Edelmetallpigment in kolloidaler Verteilung in die Polymermembran eingelagert wird.

8. Verfahren nach Anspruch 7, **dadurch gekennzeichnet,** daß auf die hydrophile ionenpermeable Polymermembran abwechselnd eine Lösung des Edelmetallsalzes und eine Lösung des Reduktionsmittels durch Tauchen, Sprühen oder Streichen aufgetragen wird, sowie daß die Polymermembran ggf. nach jedem Aufbringen der Edelmetallsalzlösung getrocknet wird.

9. Verfahren nach Anspruch 8, **dadurch gekennzeichnet,** daß zur Herstellung einer Silberkolloidfolie eine Polymermembran, vorzugsweise regenerierte Cellulose, mit einer Lösung des Edelmetallsalzes AgNO₃ und einer Glucose- oder Formaldehydlösung als Reduktionsmittel behandelt wird.

10. Verfahren nach Anspruch 8, **dadurch gekennzeichnet,** daß zur Herstellung einer Platinkolloidfolie eine Polymermembran, vorzugsweise regenerierte Cellulose mit einer Hexachlorplatinsäurelösung und einer Zinn(II)-Lösung als Reduktionsmittel behandelt wird.

11. Verfahren nach Anspruch 7, **dadurch gekennzeichnet,** daß auf die hydrophile ionenpermeable Polymermembran eine gemeinsame Lösung des Edelmetallsalzes und des Reduktionsmittels durch Tauchen, Sprühen oder Streichen aufgebracht wird und nach beendeter reduktiver Einlagerung der Edelmetallpigmente an der Polymermembran oberflächlich abgeschiedene Metallgranulate abgewaschen werden.

12. Verfahren nach Anspruch 11, **dadurch gekennzeichnet,** daß die Polymermembran, vorzugweise regenerierte Cellulose, mit einer wäßrigen Lösung aus Silbernitrat und D+Glucose besprücht und in einem Behälter in Ammoniakatmosphäre getrocknet wird, wobei die Temperatur vorzugsweise auf 50°C erhöht wird.

13. Verfahren nach Anspruch 8 oder 11, **dadurch gekennzeichnet,** daß in die hydrophile ionenpermeable Membran Silberpigmente reduktiv eingebracht werden und in einem Zementationsprozeß durch Goldpigmente ersetzt werden.

14. Verfahren nach Anspruch 13, **dadurch gekennzeichnet,** daß die hydrophile ionenpermeable Membran im Zementationsprozeß mit einer Tetrachlorgoldsäurelösung in Kontakt gebracht wird.

15. Verfahren nach Anspruch 11, **dadurch gekennzeichnet,** daß die hydrophile ionenpermeable Polymermembran durch Trocknen einer als Film aufgetragenen Polyvinylalkohollösung hergestellt wird, sowie daß dieser Film zum Zweck der chemischen Vernetzung Glutardialdehyddämpfen ausgesetzt wird.

16. Verfahren nach einem der Ansprüche 7 bis 15, **dadurch gekennzeichnet,** daß vorzugsweise nach dem Einbringen der Edelmetallpigmente in an sich bekannter Weise Indikatormaterial in homogener Verteilung in die Polymermembran eingebracht wird.

## Claims

1. Protective coating, preferably for the part of an optical ion sensor in contact with the sample, which comprises a hydrophilic ion-permeable polymer membrane (1) characterised in that the protective coating contains reductive or reductive-cementative precipitated noble metal pigments (10) for suppressing extraneous light.

2. Protective coating according to claim 1, characterised in that the hydrophilic ion-permeable polymer membrane (1) has a high molecular weight and/or cross-linking and/or is present in a semi-crystalline state.

3. Protective coating according to claim 1 or 2, characterised in that the hydrophilic ion-permeable polymer membrane (1) comprises regenerated cellulose.

4. Protective coating according to claim 1 or 2, characterised in that the hydrophilic ion-permeable polymer membrane (1) is a cross-linked or extended polyvinyl alcohol.

5. Protective coating according to one of claims 1 to 4, characterised in that the hydrophilic ion-permeable polymer membrane (1) contains noble metal pigments (10) from the group Ag, Au and Pt in colloidal distribution.

6. Protective coating according to one of claims 1 to 5, characterised in that indicator material (9) is present in a homogeneous distribution in the hydrophilic ion-permeable polymer membrane (1) which contains noble metal pigments.

7. Method of manufacturing a protective coating according to one of claims 1 to 7, characterised in that a hydrophilic ion-permeable polymer membrane is produced, that the polymer membrane is treated with at least one dissolved salt of a noble metal of the group Ag, Au and Pt, and at least one reducing agent, whereby the corresponding noble metal pigment is incorporated in the polymer membrane in colloidal distribution.

8. Method according to claim 7, characterised in that a solution of the noble metal salt and a solution of the reducing agent are applied to the hydrophilic ion-permeable polymer membrane alternately by immersion, spraying or coating, and that the polymer membrane is dried, if necessary, after each application of the noble metal salt solution.

9. Method according to claim 8 characterised in that, for producing a silver colloid foil, a polymer membrane, preferably regenerated cellulose, is treated with a solution of the noble metal salt AgNO₃ and a glucose or formaldehyde solution as the reducing agent.

10. Method according to claim 8, characterised in that, for producing a platinum colloid foil a polymer membrane, preferably regenerated cellulose, is treated with a hexachloro-platinic acid solution and a tin (II) solution as the reducing agent.

11. Method according to claim 7 characterised in that a combined solution of the noble metal salt and the reducing agent is applied to the hydrophilic ion-permeable polymer membrane by immersion, spraying or coating and on completion of the reductive incorporation of the noble metal pigment metal particles precipitated on the surface of the polymer membrane are washed off.

12. Method according to claim 11, characterised in that the polymer membrane, preferably regenerated cellulose, is sprayed with an aqueous solution of silver nitrate and D+ glucose and dried in a vessel in an atmosphere of ammonia, the temperature being preferably raised to 50°C.

13. Method according to claim 8 or 11, characterised in that silver pigments are introduced into the hydrophilic ion-permeable membrane by reduction and are replaced by gold pigments in a cementation step.

14. Method according to claim 13, characterised in that the hydrophilic ion-permeable membrane is brought into contact with a tetrachloro-auric acid solution in the cementation step.

15. Method according to claim 11, characterised in that the hydrophilic ion-permeable polymer membrane is produced by drying a polyvinyl alcohol solution applied as a film, and that this film is exposed to glutar-di-aldehyde vapours to cause chemical cross-linking.

16. Method according to one of claims 7 to 15, characterised in that, preferably after the introduction of the noble metal pigments, indicator material is introduced into the polymer membrane in a homogeneous distribution in a manner known in itself.

## Revendications

1. Couche de couverture utilisable de préférence sur la face en regard de l'échantillon à examiner, de détecteurs optiques d'ions, caractérisée en ce que cette couche, constituée par une membrane polymère (1) hydrophile perméable aux ions contient des pigments de métaux précieux (10), déposés par réduction ou réduction-cémentation, dans le but d'éliminer la lumière parasite.

2. Couche de couverture selon la revendication 1, caractérisée en ce que la membrane polymère (1) hydrophile perméable aux ions présente un poids moléculaire élevé et/ou des réticulations transversales et/ou un état semi-cristallin.

3. Couche de couverture selon la revendication 1 ou 2, caractérisée en ce que la membrane polymère (1) est faite de cellulose régénérée.

4. Couche de couverture selon la revendication 1 ou 2, caractérisée en ce que la membrane polymère (1) est faite d'un alcool polyvinylique réticulé transversalement ou étiré.

5. Couche de couverture selon l'une des revendications 1 à 4, caractérisée en ce que la membrane polymère (1) contient des pigments d'un métal précieux du groupe Ag, Au et Pt divisés à l'état colloïdal.

6. Couche de couverture, selon une des revendications 1 à 5, caractérisée en ce que la membrane polymère qui contient des pigments d'un métal précieux porte également un matériau indicateur (9) réparti de manière homogène.

7. Procédé de fabrication d'une couche de couverture conforme à une des revendications 1 à 6, caractérisé en ce que l'on réalise une membrane polymère hydrophile perméable aux ions, on la soumet à l'action d'au moins une solution d'un sel d'un métal précieux du groupe Ag, Au et Pt et également à l'action d'un réducteur, de manière que le pigment métallique correspondant s'intègre sous forme de dispersion colloïdale à la membrane polymère.

8. Procédé selon la revendication 7, caractérisé en ce qu'on recouvre la membrane polymère, alternativement, une solution d'un métal précieux et une solution d'un réducteur, par trempage, pulvérisation ou enduction, puis on sèche la membrane, le cas échéant après chaque apport de la solution de sel de métal précieux.

9. Procédé selon la revendication 8, caractérisé en ce que pour fabriquer une feuille d'argent colloïdal, on soumet une membrane polymère, de préférence faite de cellulose régénérée, à l'action d'une solution de nitrate d'argent AgNO₃, puis à l'action d'une solution de glucose ou de formaldéhyde intervenant comme réducteur.

10. Procédé selon la revendication 8, caractérisé en ce que pour fabriquer une feuille de platine colloïdal, on soumet une membrane polymère, de préférence faite de cellulose régénérée, à l'action d'une solution d'action hexachloroplatinique, puis à l'action d'une solution d'ions d'étain (II) intervenant comme réducteur.

11. Procédé selon la revendication 7, caractérisé on ce qu'on dépose sur la membrane polymère hydrophile et perméable aux ions une solution contenant à la fois un sel de métal précieux et un réducteur, par trempage, pulvérisation ou enduction, puis après que la réduction ait entraîné le dépôt de pigments de métal précieux sur la membrane, on élimine par lavage les granulats métalliques déposés en surface.

12. Procédé selon la revendication 11, caractérisé en ce que la membrane polymère en cellulose régénérée de préférence, est arrosée d'une solution aqueuse de nitrate d'argent et de glucose D⁺, puis séchée en atmosphère ammoniacale dans un récipient, à une température atteignant de préférence 50°.

13. Procédé selon la revendication 8 ou 11, caractérisé en ce qu'on introduit, par réduction, des pigments d'argent dans la membrane polymère et on leur substitue des pigments d'or, par cémentation.

14. Procédé selon la revendication 13, caractérisé en ce que la membrane hydrophile perméable aux ions est mise en contact, dans le procédé de cémentation avec une solution d'acide tétrachloroaurique.

15. Procédé selon la revendication 11, caractérisé en ce que la membrane polymère hydrophile et perméable aux ions est fabriquée par séchage d'une solution d'alcool polyvinylique déposée sous la forme d'un film qui est soumis à l'action de vapeurs de dialdéhyde glutarique, afin de produire sa réticulation chimique.

16. Procédé selon une des revendications 7 à 15, caractérisé en ce que, de préférence après insertion des pigments de métal précieux on introduit, de manière connue, un matériau indicateur sous forme de dispersion homogène dans la membrane polymère.
